# EUROPEAN PATENT APPLICATION

(11) **EP 0 673 971 A1**
(43) Date of publication of application: **27.09.1995**
(21) Application number: 95301497.4
(22) Date of filing: 08.03.1995
(51) Int. Cl.: C08L 69/00

(54) **Reduced gloss, high impact compositions of polycarbonate and acrylonitrile-butadiene-styrene**

(30) Priority: 22.03.1994 US 216197
(71) Applicant: GENERAL ELECTRIC COMPANY, Schenectady, NY 12345 (US)
(72) Inventor: Bhatia, Qamar Singh, Evansville, Indiana 47712 (US); Howe, Robert L., Greenville, New York 12083 (US)
(74) Representative: Szary, Anne Catherine

(57) **Abstract**

A reduced gloss polycarbonate, rubber graft copolymer and ungrafted copolymer blend composition is provided. The graft copolymer is a low graft deficiency unsaturated nitrile-vinyl aromatic-diene rubber graft copolymer, for example, acrylonitrilebutadiene-styrene graft copolymer. The ungrafted copolymer is a vinyl aromatic-unsaturated nitrile copolymer, for example, styrene-acrylonitrile copolymer. The compositions preferably contain a flame retardant, more preferably a phosphate flame retardant, and an antidrip agent, for example, polytetrafluoroethylene. The composition is a melt blended composition which contains agglomerated rubber particles, and exhibits reduced gloss and is useful for making molded articles such as business equipment, specifically computer housings.

## Description

### BACKGROUND OF THE INVENTION

### Field of the Invention

The present invention relates to polycarbonate resin compositions, and more particularly relates to compositions comprising polycarbonate resin, unsaturated nitrile-vinyl aromatic-diene rubber graft copolymer and an ungrafted unsaturated nitrile-vinyl aromatic copolymer.

### Description of the Related Art

Blends of polycarbonate with acrylonitrile-butadiene-styrene graft copolymers are known. There is a desire to produce a final molded article that has a mat surface appearance, for example, a reduced gloss appearance. Melt blended compositions exhibiting a service of mat appearance have been disclosed, see for example Dufour et al, U.S. patent 5,061,754, issued October 29, 1991, which is incorporated herein by reference. Dufour disclosed melt blending polycarbonate with grafted rubber having particles having an average size of from 20 to 300 nanometers to yield a final melt blended composition having aggregates of average size 500 to 10,000 nanometers, and taught that if the components of the rigid phase are compatible the system is expected to display only 1 glass transition temperature located between the glass transition temperatures of the pure polymers.

In certain applications, for example, housing for computers and other business machines, there is a need to provide reduced gloss polycarbonate/ABS graft copolymer blends which exhibit reduced gloss while preferably also exhibiting improved gate blush, higher electrolysis platability and flame retardancy.

Accordingly, an object of the present invention is to provide polycarbonate/unsaturated nitrile-vinyl aromatic-diene rubber graft copolymer blends which exhibit reduced gloss, while also preferably providing flame retardancy, improved gate blush and enhanced platability.

### SUMMARY OF THE INVENTION

The present invention provides resin compositions obtained by melt blending a polycarbonate resin, an unsaturated nitrile-vinyl aromatic-diene rubber graft copolymer, an ungrafted unsaturated nitrile-vinyl aromatic copolymer to yield a reduced gloss composition. The graft copolymer has an initial number average rubber particle size of between 330 nanometers and 400 nanometers; the ungrafted vinyl aromatic-unsaturated nitrile copolymer has a number average molecular weight of from 35,000 to 75,000. The melt blended composition has a first glass transition temperature of from 100°C to 110°C, and a second glass transition temperature of from 85°C to 95°C. The composition comprises agglomerated rubber particles having a number average particle size of between 500 and 5,000 nanometers, and the composition has a gloss level of less than 75 percent at 60° as determined by ASTM D523. The compositions are useful for making injection molded articles such as computer housings, and preferably the compositions contain amounts of flame retardants and drip suppressants (antidripping agents).

### Detailed Description of the Invention

The present invention involves a composition obtained by melt blending a polycarbonate resin, an unsaturated nitrile-vinyl aromatic-diene rubber graft copolymer having a number average particle size of from 330 nanometers to 400 nanometers, and an ungrafted vinyl aromatic-unsaturated nitrile copolymer having a number average molecular weight of from 35,000 to 75,000, wherein the composition has a first glass transition temperature of from 100°C to 110°C, and a second glass transition temperature of from 85°C to 95°C. The composition comprises agglomerated graft copolymer having a number average particle size of between 500 and 5,000 nanometers, and the composition has a gloss level of less than 75 percent at 60° as determined by ASTM D523. The composition preferably further comprises a flame retarding and gloss reducing amount of a flame retardant, preferably a phosphate flame retardant, and further contains a drip suppressant (antidripping agent), such as polytetrafluoroethylene.

Preferred aromatic polycarbonates A are homo-and co-polycarbonates based on at least one diphenol corresponding to the following formulae: 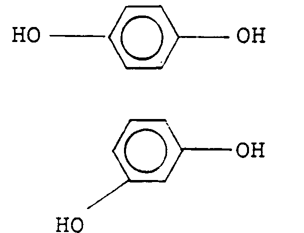 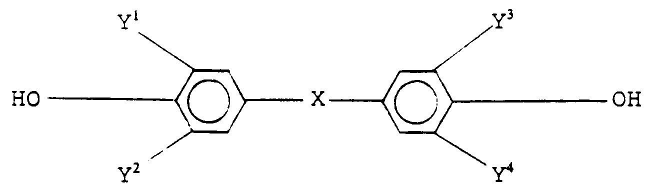
in which X is a single bond, -CH₂-, 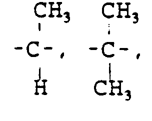
-0-, -S-, -SO₂- or 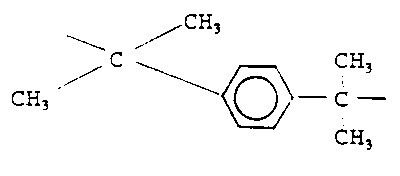
and
Y¹ to Y⁴ independently of one another represent hydrogen, C₁ to C₄ alkyl, preferably methyl, or halogen, preferably chlorine or bromine.

These and other suitable diphenols are described, for example, in U.S. Pat. Nos. 3,028,365, 3,275,601, 3,148,172, 3,062,781, 2,991,273, 3,271,367, 2,999,835, 2,970,131 and 2,999,846; in DE-OSS No. 1 570 703, 2 063 050, 2 063 052, 2 211 956, 2 211 957; FR-P No. 1 561 518 and in the work by H. Schnell entitled "Chemistry and Physics of Polycarbonates", Interscience Publishers, New York, 1964.

Preferred diphenols are, for example, 2,2-bis(4-hydroxyphenyl)-propane, 1,1-bis-(4-hydroxyphenyl)-cyclohexane, 2,2-bis-(3,5-dichloro-4-hydroxyphenyl)-propane, 2,2-bis-(3,5-dimethyl-4-hydroxyphenyl)-propane, 1,1-bis-(3,5-di-methyl-4-hydroxyphenyl)-ethane, bis-(3,5-dimethyl-4-hydroxyphenyl)-methane and bis-(4-hydroxyphenyl)-sulfide.

The aromatic polycarbonates A may be branched by incorporation of small quantities, preferably 0.05 to 2.0 mole-% (based on the diphenols used), of trifunctional or more than trifunctional compounds.

Preferred branching agents for the polycarbonates A are at least trifunctional compounds of the type described, for example, in DE-0SS Nos. 1 570 533 and 1 595 762 and in U.S. Pat. No. 3,544,514, namely preferably trihydric phenols, aromatic tricarboxylic acids or reactive derivatives thereof and hydroxycarboxylic acids containing at least three functional groups. Examples of preferred branching agents are 2,4-bis-(4-hydroxyphenylisopropyl)-phenol, 2,6-bis-(2'hydroxy-5'-methylbenzyl)-4-methylphenol, 2-(4-hydroxyphenyl)-2-(2,4-dihydroxyphenyl)-propane, 1,4-bis-(4,4'-dihydroxytriphenylmethyl)-benzene, 2,4-dihydroxybenzoic acid, trimesic acid, cyanuric chloride, 3,3-bis-(4-hydroxyphenyl)-2-oxo-2,3-di-hydroindole and 3,3-bis-(4-hydroxy-3-methylphenyl)-2-oxo2,3-dihydroindole.

The aromatic polycarbonates A have average molecular weights M_{w} of generally 10,000 to 200,000 and preferably from 20,000 to 80,000, as determined by light scattering.

To adjust to the molecular weight M_{w} of the polycarbonates A, chain terminators may be used in a known manner in the calculated quantities.

Preferred terminal groups for the polycarbonates A are residues of phenol, benzoic acid, mono- and dialkylphenols and mono-and dialkylbenzoic acids, of which the alkyl substituents may contain in all up to 20 carbon atoms per terminal group. Particularly preferred terminal groups correspond to the following formula 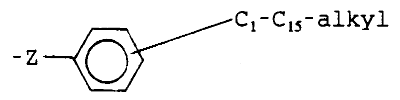
in which
Z represents -O- or

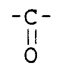

Examples of preferred terminal groups are the residues of phenol, p-tert.-butylphenol, p-isooctylphenol, p-n-nonylphenol, 3,5-di-tert.-butylphenol, 2-(3,5-dimethylheptyl)phenol and 3-(3,5-dimethylheptyl)-phenol.

Instead of the free phenols, it is possible to use their halocarbonic acid esters and, instead of the carboxylic acids, their acid chlorides. The quantities in which the terminal groups are present are preferably 1 to 10 mole %, based on the diphenol residues of the polycarbonate A.

Graft copolymer is preferably prepared by adding 15 to 50 parts by weight of a monomer mixture of one or more of aromatic vinyl compounds and vinyl cyanides (unsaturated nitriles), (and optional with methacrylic acid alkyl esters, and acrylic acid alkyl esters) to 50 to 85 parts by weight of a diene-based rubber (preferably a butadiene based rubber) and then polymerizing the monomer mixture in the presence of the diene-based rubber.

The butadiene-based rubber may contain small amounts of cross-linking agents and chain transfer agents. At the time of graft polymerization, small amounts of cross-linking agents or chain transfer agents may be incorporated.

Aromatic vinyl compounds, (also referred to herein as vinyl aromatic monomers) which can be used as the graft component for the graft copolymer include styrene, α-methylstyrene, chlorostyrene, tert-butylstyrene, and p-methylstyrene. Of these compounds, styrene is most preferred. As the vinyl cyanide (also referred to herein as unsaturated nitrile monomer), acrylonitrile is most preferred. In addition, methacrylonitrile can be used. Preferred examples of methacrylic acid alkyl esters are those compounds in which the alkyl group has from 1 to 4 carbon atoms, such as MMA, n-butyl methacrylate, and ethyl methacrylate.

The graft component as used herein is at least one monomer selected from the group consisting of the above-described aromatic vinyl compounds and vinyl cyanides (optionally with methacrylic acid alkyl esters and acrylic acid alkyl esters). Typical examples are a styrene-acrylonitrile mixture and a methyl methacrylate-styrene-acrylonitrile mixture.

The diene-based rubber to be used as the rubber (substrate) component for the graft copolymer is preferably a butadiene based rubber such as polybutadiene or a butadiene copolymer prepared from a major proportion of butadiene and one or more vinyl monomers copolymerizable with butadiene.

Cross-linking agents which can be used in the polymerization of the rubber or graft component are those compounds copolymerizable with butadiene. Examples are divinylbenzene, ethylene glycol dimethacrylate, diethylene glycol dimethacrylate, triethylene glycol dimethacrylate, tetraethylene glycol dimethacrylate, ethylene glycol diacrylate, diethylene glycol diacrylate, triethylene glycol diacrylate, trimethylolpropane trimethacrylate or acrylate, 1,3-butanediol dimethacrylate, and 1,3-butanediol diacrylate.

As chain transfer agents, known compounds such as n-octylmercaptan, n-dodecylmercaptan, and tert-dodecylmercaptan can be used.

With regard to the ratio of the rubber component to the graft (superstrate) component, graft copolymer is preferably prepared from 50 to 85 parts by weight of the rubber component and 15 to 50 parts by weight of the graft component, provided that the sum of the rubber and graft components is 100 parts by weight. Graft polymerization may be performed in either one stage or multiple stages. Moreover, it may be performed while continuously feeding the monomer mixture. The high rubber content of the graft copolymer facilitates agglomeration during melt blending.

The process for making the graft copolymer may further result in the formation of ungrafted vinyl aromatic-unsaturated nitrile copolymer. Thus, the ungrafted copolymer of the present compositions may be formed concurrently with the formation of the graft copolymer or may be made by an additional reaction to specifically form ungrafted copolymer to be blended into the present compositions. The ungrafted copolymer is the reaction product of a vinyl aromatic monomer and an unsaturated nitrile monomer, and is preferably free of rubber. Suitable vinyl aromatic monomers and unsaturated nitrile monomers are as set out above for the graft copolymer. Preferably the ungrafted copolymer consists of the copolymer of styrene and acrylonitrile and having from 65 to 80 percent by weight styrene based on the total weight of the ungrafted copolymer, more preferably from 70 to 75 percent by weight thereof, and most preferably about 73 percent by weight thereof; and preferably comprises from 20 to 35 percent by weight acrylonitrile based on the total weight of the ungrafted copolymer, more preferably from 25 to 30 percent by weight thereof, most preferably about 27 percent by weight thereof. The ungrafted copolymer preferably has a molecular weight of between 35,000 and 75,000, more preferably between 37,000 and 60,000, most preferably about 40,000 on a number average basis.

The graft efficiency of the graft copolymer is at a low level preferably between 0.10 and 0.35, more preferably between 0.15 and 0.30, most preferably between 0.20 and 0.27. Graft efficiency is defined as a fraction of grafted SAN divided by total SAN. Low graft efficiency facilitates agglomeration during melt blending.

The rubber particle size of the graft copolymer prior to melt blending is between 330 nanometers and 400 nanometers, preferably between 340 nanometers and 375 nanometers, most preferably about 350 nanometers.

Rubber particle number average size is measured by Transmission Electron Microscopy. The rubber particles may be stained with a suitable staining agent such as osmium tetroxide OSO₄.

As a result of melt blending the rubber particles (the graft copolymers) are agglomerated resulting in the melt blended composition having agglomerated rubber particles having an average particle size of between 500 and 5,000 nanometers (nm).

The compositions further exhibit two distinct glass transition temperatures, specifically exhibiting a first glass transition temperature of from 100°C to 110°C, preferably between 105°C and 108°C, and most preferably between 106°C and 107°; and a second glass transition temperature of between 85°C and 95°C, more preferably between 88°C and 93°C, most preferably between 90°C and 92°C.

The melt blended composition exhibits at room temperature a gloss level of less than 75 percent at 60° as determined by ASTM D523, more preferably exhibits a gloss of less than 73 percent at 60° as determined by ASTM D523, and most preferably exhibits a gloss of less 70 percent at 60° as determined by ASTM D523. The present composition exhibits reduced gloss, and when a phosphate flame retardant is included therein, surprisingly and unexpectedly exhibits a further reduction in gloss. The compositions preferably further contain a antidrip agent (drip suppressant) which is preferably a fluorinated polyolefin.

The fluorinated polyolefins are of higher molecular weight and have glass transition temperatures above -30°C. and generally above 100°C., fluorine contents of 59 to 76, preferably 65 to 76 and more preferably 70 to 76% by weight and average particle diameters d₅₀ of 0.05 to 20 and preferably 0.08 to 10 nm. Preferred fluorinated polyolefins are polytetrafluoroethylene, polyvinylidene fluoride, tetrafluoroethylene/hexafluoropropylene and ethylene/tetrafluoroethylene copolymers. The fluorinated polyolefins are known (cf. "Vinyl and Related Polymers" by Schildknecht, John Wiley & Sons, Inc., New York, 1962, pages 484-494, "Fluorpolymers" by Wall, Wiley-Interscience, John Wiley & Sons, Inc., New York, Vol. 13, 1970, pages 623-654; "Modern Plastics Encyclopedia", 1970-1971, Vol. 47, No. 10 A, October 1970, McGraw Hill, Inc., New York, pages 134 and 774; "Modern Plastics Encyclopedia", 1975-1976, October 1975, Vol. 52, no. 10 A, McGraw Hill, Inc., New York, pages 27, 28 and 472, and U.S. Pat. Nos. 3,671,487, 3,723,373 and 3,838,092).

The fluorinated polyolefins are preferably used in non-sintered form.

The antidrip agents are preferably present in the composition at a level of from 0.1 to 1 percent by weight based on the total weight of the composition, more preferably present at a level of from 0.15 to 0.5 percent by weight thereof, most preferably present at a level of about 0.2 percent by weight thereof.

The composition preferably further includes stabilizers such as primary antioxidants (such as hindered phenols, secondary antioxidants (such as organic phosphites), and UV light stabilizers and/or absorbers) such as benzophenones and benzotriazoles).

The flame retardant system necessary to provide the proper level of flame resistance to the composition will generally have either (a) a phosphate compound or (b) a halogenated compound in combination with a flame retardant salt. Examples of such well known halogenated compounds include decabromodiphenyl oxide, tetrabromo and/or tetrachloro diphthalimide, tetrabromobisphenol-A carbonate copolymer and the copolycarbonate of tetrabromobisphenol-A and bisphenol-A. A preferred copolymer is a 50 weight percent bromine copolycarbonate of tetrabromobisphenol-A and bisphenol-A having an I.V. (intrinsic viscosity) of about 0.37 dl/g as measured in methylene chloride at 25°C. Examples of such flame retardant salts include the perfluoroaliphatic sulfonic acid salt, i.e potassium perfluorooctylsulfonate, and aromatic sulfonic acid salts well illustrated in the patent literature and exemplified by potassium diphenylsufone sulfonate and sodium 2,4,5-trichlorobenzene sulfonate.

The phosphate compound may be either a monophosphate, a diphosphate, or a polyphosphate. A suitable generic formula for monophosphate is as follows: 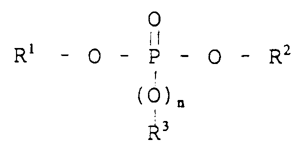
wherein
R¹, R² and R³ are alkyl groups of 1-8 carbons, or alkyl-substituted aryl groups of 7-20 carbons and "n" represents O or 1.

Monophosphate compounds which are suitable according to the invention are, for example, triphenyl phosphate, tricresylphosphate, diphenyl 2-ethylcresyl phosphate, tri-(isopropylphenyl)phosphate, diphenyl methyl phosphate and diethyl phenyl phosphate.

Suitable diphosphates may be represented by the generic formula: 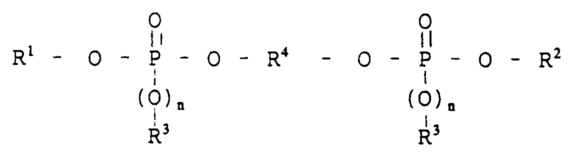
wherein R¹, R² and R³ are defined as above, and R⁴ is a divalent radical, preferably a divalent hydrocarbon radical having from 1 to 30 carbons, most preferably being an aromatic divalent radical. Preferably the diphosphate is resourceful diphosphate.

Suitable polyphosphates may be represented by the generic formula:

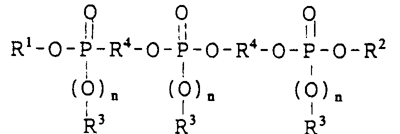

Wherein R¹, R², R³ and R⁴ are as defined above. In the above formulas, each R³ and R⁴ may be independently selected.

The flame retardant is preferably a phosphate, more preferably a diphosphate, present in an amount sufficient to reduce the gloss of the composition.

The percentage of flame retardant used in the composition can vary significantly as long as a V0 at 1/16th inch under UL94 testing conditions is achieved.

The composition preferably exhibits a notched Izod impact resistance as measured according to ASTM D256 at 1/8th inch at 75°F and ft/lbs/in of at least 10.0, more preferably at least 11.0, most preferably at least 12.0.

The compositions of the present invention are useful for business equipment, specifically computer housings, wherein there is a need for reduced gloss, enhanced impact strength and improved surface appearance at gate region. The compositions of the present invention exhibit enhanced impact strength, reduced gate blush, enhanced surface appearance and preferably improved flame retardancy.

### Examples

**Table 1**

| | A | B | 1 | 2 | 3 |
|---|---|---|---|---|---|
| PC | 90.55 | 80.05 | 80.05 | 80.05 | 80.05 |
| ABS-1 | - | 10.5 | - | - | - |
| ABS-2 | - | - | 10.5 | - | - |
| ABS-3 | - | - | - | 10.5 | 10.5 |
| FR | 8.5 | 8.5 | 8.5 | 8.5 | - |
| PTFE | .2 | .2 | .2 | .2 | .2 |
| Additive | .75 | .75 | .75 | .75 | .75 |
| Notched Izod impact | 0.4 | 10.8 | 11 | 12.1 | 11.9 |
| UL94 (1/16'') | VO | VO | VO | VO | VO |
| Gloss 60 degree | 99.4 | 98.6 | 71 | 65 | 71 |

ABS 1 - consists of 45% elastomer phase and 55% rigid phase. The elastomer phase consists of a backbone of 50% butadiene and rest is graft of styrene acrylonitrile in a weight ratio of -73% to 27%. The rigid phase consists 75% styrene copolymerized with 25% acrylonitrile and has a number average molecular weight Mn of 40,000. The graft to rubber ratio is .25. The graft rubber particles have an average size of 350 nm.
ABS 2 - consists of 48% elastomer phase and 52% rigid phase. The elastomer consists of 50% butadiene with rest as grafted styrene acrylonitrile. The rigid phase consists 75% styrene copolymerized with 25% acrylonitrile with a Mn of 40,000. The graft to rubber ratio is .32. The graft rubber particles have an average size of 100nm.
ABS 3 - consists of 48% elastomer phase and 52% rigid phase. The elastomer consists of 50% butadiene with rest as grafted styrene acrylonitrile. The rigid phase consists 75% styrene copolymerized with 25% acrylonitrile with Mn of 40,000. The graft to rubber ratio is .43. Has a wide particle size distribution of 70-300 nm.

The Comparative Examples A and B when compared with Examples 1-3 of the present invention, illustrate the enhanced properties of the present invention. Additionally, note the enhanced gloss reduction achieved by the incorporation of a phosphate flame retardant and composition 2 of the present invention compared with composition 3 which lacks the phosphate flame retardant. Additionally, composition of Comparative Example B and the compositions of Examples 1-3 exhibited two distinct glass transition temperatures, with a first glass transition temperature of 106.7°C and a second glass transition temperature of 91.1°C, indicating that the ungrafted styrene-acrylonitrile copolymer exists as a separate phase and is not dissolved in the polycarbonate resin. Transmission Electron Microscopy also indicated a separate phase of styrene-acrylonitrile copolymer. The use of the phosphate flame retardant reduces the gloss of the composition. Reduced graft efficiency also resulted in a decrease in gloss.

## Claims

1. A composition obtained by melt blending a polycarbonate resin, an unsaturated nitrile-vinyl aromatic-diene rubber graft copolymer having a number average rubber particle size of from 330 nm to 400 nm, and an ungrafted vinyl aromatic-unsaturated nitrile copolymer having a number average molecular weight of from 35,000 to 75,000, said composition having a first glass transition temperature of from 100°C to 110°C, and a second glass transition temperature of from 85°C to 95°C, said composition comprising agglomerated graft copolymer having a number average particle size of between 500 and 5,000 nm, and said composition having a gloss level of less than 75% at 60° as determined by ASTM D523.

2. The composition of Claim 1 wherein said composition further comprises a phosphate flame retardant.

3. The composition of Claim 2 wherein said composition further comprises an antidrip agent.

4. The composition of Claim 1 wherein said polycarbonate resin is present at a level of from 70 to 90 percent by weight based on the total weight of the composition.

5. The composition of Claim 1 wherein said graft copolymer and ungrafted copolymer are present in the composition at a combined level of from 5 to 12 percent by weight based on the total weight of the composition.

6. The composition of Claim 2 wherein said flame retardant is an aromatic diphosphate.

7. The composition of Claim 3 wherein said antidrip agent is polytetrafluoroethylene polymer.

8. The composition of Claim 1 wherein said composition consists essentially of said polycarbonate, said graft copolymer, said ungrafted copolymer, a flame retardant and an antidrip agent.

9. The composition of Claim 1 wherein said composition consists of said polycarbonate, said graft copolymer, said ungrafted copolymer, a flame retardant and an antidrip agent.

10. An article made from the composition of any preceding claim.

11. The article of Claim 10 wherein said article is made by injection molding.
